Europäisches Patentamt

European Patent Office

Office européen des brevets

(11) Numéro de publication: **0 013 237**
**A1**

(12) **DEMANDE DE BREVET EUROPEEN**

(21) Numéro de dépôt: **79401059.5**

(22) Date de dépôt: **21.12.79**

(51) Int. Cl.³: **C 03 B 37/06**
**D 01 D 5/14**

(30) Priorité: **22.12.78 FR 7836189**

(43) Date de publication de la demande:
**09.07.80 Bulletin 80/14**

(84) Etats Contractants Désignés:
**AT BE CH DE GB IT LU NL SE**

(71) Demandeur: **ISOVER SAINT-GOBAIN**
**62, Boulevard Victor Hugo**
**F-92209 Neuilly sur Seine(FR)**

(72) Inventeur: **Battigelli, Jean A.**
**17, Rue Edouard Vaillant**
**F-60290 Rantigny(FR)**

(72) Inventeur: **Levecque, Marcel**

**Decede(FR)**

(72) Inventeur: **Plantard, Dominique**
**16, Route de Mouy**
**F-60290 Rantigny(FR)**

(74) Mandataire: **Eudes, Marcel**
**SAINT-GOBAIN RECHERCHE 39 Quai Lucien Lefranc**
**F-93304 Aubervilliers CEDEX(FR)**

(54) **Procédé et dispositif pour la fabrication de fibres au moyen de courants gazeux, à partir d'une matière étirable.**

(57) L'invention est relative à un procédé et à un dispositif pour la fabrication de fibres, à partir d'une matière étirable, telle que le verre fondu, par étirage au moyen de courant gazeux.

Elle consiste essentiellement à engendrer, à distance et en direction d'un courant gazeux principal (B) au moins un jet gazeux (J), de plus petite dimension qui pénètre dans le courant principal pour y créer une zone d'interaction, à empêcher l'induction de courants de gaz ambiant d'un côté de chaque jet au moyen d'un écran protecteur (16) présentant une partie rectiligne le long de la trajectoire du jet vers le courant principal, et à amener la matière (G) sous forme d'un filet à l'état étirable, dans les gaz induits par chaque jet du côté opposé à l'écran de façon à introduire chaque filet dans une zone d'interaction où il est transformé en fibres.

FIG. 1.

EP 0 013 237 A1

# FABRICATION DE FIBRES AU MOYEN DE COURANTS GAZEUX, A PARTIR D'UNE MATIERE ETIRABLE

La présente invention est relative à la fabrication de fibres à partir d'une matière étirable, au moyen de courants gazeux. Elle est particulièrement intéressante pour le fibrage de matières thermoplastiques minérales telles que le verre ou les matières similaires et la description se réfère donc, à titre d'exemple à ce domaine particulier étant entendu que la présente invention, s'applique aussi au fibrage de matières thermoplastiques diverses.

Il est connu d'après les publications de brevet français n° 2.223.318 et n° 2.362.222 de fabriquer des fibres par étirage d'un filet de verre-fondu dans une zone d'interaction comprenant deux tourbillons contra-rotatifs, et engendrée par pénétration d'un jet gazeux, dit jet secondaire ou jet porteur, dans un courant gazeux principal de plus grande dimension, dirigé transversalement au jet.

D'autres demandes de brevet françaises concernant la même technique décrivent de plus un procédé selon lequel chaque filet de verre est soumis à deux étapes d'étirage, l'une dans un jet gazeux secondaire dont l'écoulement a été perturbé par un organe déflecteur, et la seconde dans la zone d'interaction correspondante située dans le courant principal. L'organe déflecteur ou organe de guidage, disposé sur la trajectoire du jet entre son orifice d'émission et la limite du courant principal, est constitué par exemple d'une plaque déflectrice ou peut présenter soit une surface de profil convexe soit un canal de profil concave. Il se forme dans chaque jet, en partie du fait de la perturbation qui dévie au moins localement son écoulement, une zone d'écoulement laminaire bordée par deux tourbillons contra-rotatifs. Les courants induits par chaque jet entraînent le filet de verre correspondant dans cette zone laminaire, ce qui permet de stabiliser son entrée dans le jet. Le filet est alors soumis à l'action d'étirage des tourbillons contra-rotatifs du jet et est simultanément entraîné vers la zone d'interaction du courant principal où il subit un étirage additionnel.

Il faut aussi noter que, dans ces demandes françaises, les divers composants d'un centre de fibrage, à savoir le générateur de courant gazeux principal, la source d'alimentation en verre, le générateur de jet gazeux et l'organe déflecteur ont des positions telles que l'orifice d'alimentation en verre se trouve relativement peu éloigné du déflecteur. De ce fait, en cas d'irrégularité momentanée de l'alimentation en verre, de chute de pression du jet gazeux ou d'arrêt intempestif de l'alimentation en gaz, les filets de verre fondu risquent de se déposer sur le déflecteur et de le détériorer compte tenu des hautes températures de mises en oeuvre.

La présente invention a pour objet un procédé et un dispositif permettant d'obtenir une meilleure stabilité de l'alimentation en matière étirable vers les jets gazeux et le courant principal que dans le système de fibrage décrit dans la publication de brevet n° 2.362.222, système qui ne comporte aucun organe pour dévier ou guider les jets, tout en réduisant au minimum les risques signalés d'accumulation de matière fondue sur des organes interposés sur la trajectoire des jets. Cet objet peut être atteint, sans avoir à organiser de tourbillons contra-rotatifs dans chaque jet, en disposant le long de la trajectoire des jets au moins un écran de forme appropriée. Cet écran présente un élément de surface à génératrices rectilignes disposées le long d'une partie au moins de la trajectoire du jet, entre son orifice d'émission et le courant principal ,

0013237

et empêchant l'induction de courants de gaz d'un côté du jet. Le filet de matière étirable est introduit dans la zone de gaz induit du côté du jet opposé à l'écran.

En l'absence d'arrivée d'air induit sur ce côté, l'écoulement du jet se trouve stabilisé le long de la surface de l'écran : ceci permet de stabiliser à son tour l'alimentation du filet entraîné dans le jet par l'air induit. De plus, l'écran et l'orifice d'alimentation en verre étant situés sur des côtés opposés du jet, les risques de collage ou d'accumulation du verre sur l'écran sont réduits au minimum en cas de chute de pression du jet.

Il est prévu de disposer les trois éléments principaux d'un centre de fibrage, à savoir le générateur de courant principal, le générateur de jet et la source d'alimentation en verre dans des positions relatives telles que les courants de gaz induits fassent entrer un filet de verre dans chaque jet soit à distance du point de pénétration du jet dans le courant principal, soit au voisinage de ce point.

Pour la mise en oeuvre de la présente invention, on utilise une juxtaposition de jets définissant autant de centres de fibrage. Bien que ces jets successifs puissent être suffisamment proches les uns des autres pour donner naissance à quelques courants tourbillonnaires (ou tourbillons), il n'est pas nécessaire, dans la pratique de l'invention, de développer des paires de tourbillons contra-rotatifs, puisque l'écran associé à chaque jet empêche l'entrée d'air induit d'un côté desdits jets et provoque un effet de "surface" qui tend déjà à stabiliser l'écoulement.

Comme précisé ci-après dans la description détaillée de divers modes de réalisation de l'invention, faite en référence aux figures, l'écran qui isole de l'air ambiant un côté de chaque jet peut présenter diverses formes. Il est possible notamment soit de prévoir un écran individuel pour chaque jet, soit de disposer, le long d'une succession de jets espacés latéralement, un écran ayant une surface commune à plusieurs jets.

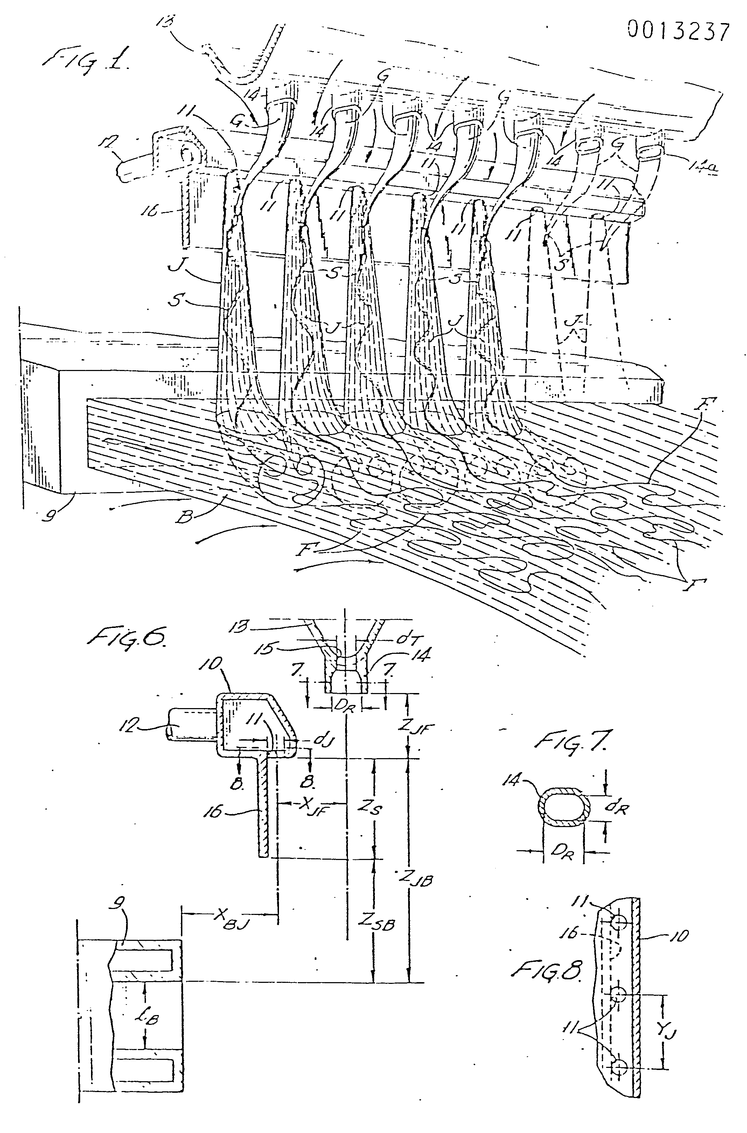

D'autre part, bien que les figures 1 à 8 montrent une forme préférée de l'invention avec l'écran disposé en amont des jets, eux-mêmes situés en amont de la source d'alimentation en matière étirable, on peut aussi placer l'écran en aval des jets par rapport au sens d'écoulement du courant principal, ces jets étant disposés dans ce cas en aval de ladite source d'alimentation.

La figure 1 est une vue schématique en perspective d'un courant gazeux principal auquel sont associés une série de centres de fibrage successifs comprenant chacun un jet et une alimentation pour un filet de verre.

Les figures 2 et 3 sont des coupes verticales à plus grande échelle des éléments de l'un des centres de fibrage de la figure 1, montrant l'induction de gaz ambiant dans le jet et deux dispositions différentes des éléments d'un centre de fibrage.

La figure 4 représente en coupe verticale une autre forme de réalisation.

La figure 5 est une vue en perspective de l'écran utilisé séparément pour chaque jet sur la figure 4.

La figure 6 montre en coupe verticale les éléments du dispositif de fibrage schématisé sur les figures 1 et 2, avec indication des dimensions relatives.

La figure 7 est une section horizontale suivant la ligne 7-7 de la figure 6 qui montre la forme de l'organe d'alimentation en verre.

La figure 8 est une coupe partielle suivant la ligne 8-8 de la figure 6 indiquant l'espacement entre les centres de fibrage adjacents dans une série de centres successifs telle que représentée sur la figure 1.

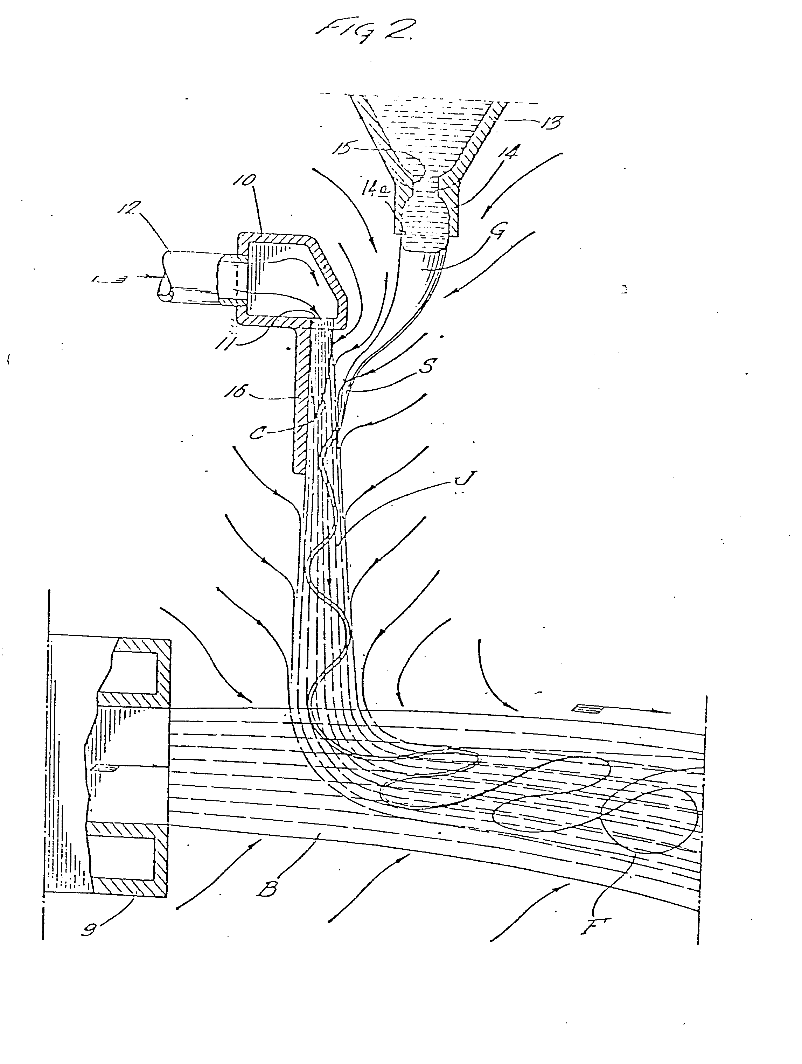

On se reporte tout d'abord à la forme de réalisation des figures 1 et 2. Une tuyère 9 émet un courant principal B, avantageusement constitué de produits de combustion fournis par une chambre de combustion (non représentée). Les jets gazeux sont émis par une nourrice d'alimentation 10 située au-dessus du courant principal et percée d'une série d'orifices 11 se trouvant à distance dudit courant. La position des orifices est telle que les jets J sont dirigés de haut en bas, vers le courant principal, où ils pénètrent pour y engendrer des zones d'interaction. La nourrice à jets 10 est alimentée en fluide approprié, par exemple en air comprimé, au moyen d'un ou plusieurs raccords 12.

Le courant principal a une largeur suffisante pour pouvoir coopérer avec une série de jets et donner naissance à une série de zones d'interaction correspondantes là où les jets le pénètrent. Il intéresse ainsi une série de centres de fibrage comportant chacun un filet de matière étirable, un jet gazeux et une zone d'interaction.

La source d'alimentation en matière étirable, en particulier en verre, peut comprendre une filière 13 munie d'une série de réservoirs ou de tétons d'alimentation 14, alimentés en verre par l'intermédiaire d'un orifice calibré 15. Les bulbes de verre G sortant des orifices 14 a situés à l'extrémité des réservoirs 14 donnent naissance à des filets S lorsque le verre entre dans la zone d'air induit par les jets et qu'il est soumis à l'influence des jets eux-mêmes. Chaque filet de verre est alors entraîné vers le bas par un jet et introduit dans la zone d'interaction du courant principal, ce qui provoque son étirage et le transforme en une fibre, comme indiqué en F.

L'installation représentée sur les figures 1 et 2 comporte aussi un élément qui forme un écran 16 pour les jets. Cet écran possède une plaque ou une surface plane dont le bord supérieur se raccorde à la face inférieure de la nourrice à jets 10 sur un côté des orifices d'émission 11, et dans leur voisinage immédiat. L'écran 16 a une longueur suffisante pour border chacun des jets émis par la série d'orifices 11 et il s'étend en ligne droite le long d'une partie de la trajectoire du jet à partir de l'orifice d'émission correspondant.

Pour expliquer le fonctionnement des centres de fibrage représentés sur les figures 1 et 2, il convient de souligner tout d'abord que, comme tout jet gazeux, chacun de ceux-ci est formé d'un coeur C qui comprend le gaz fourni par l'orifice 11 correspondant et qui possède une vitesse égale à la vitesse de sortie du gaz mesurée au niveau de l'orifice. Ce coeur présente une forme conique et sa longueur est de l'ordre de 2 à 5 fois le diamètre de l'orifice d'émission du jet, valeur variant en fonction de la vitesse de sortie du gaz. Le gaz constituant le coeur du jet se mélange très rapidement avec l'air induit et la majeure par-

0013237

tie de l'écoulement J du jet est ainsi formée d'un mélange du gaz émis à travers l'orifice et d'air induit. Ceci est illustré sur la figure 2 où les flèches tracées autour des jets représentent l'écoulement des courants d'air induits par le jet. Il va de soi que cette induction se produit avec n'importe quel gaz ambiant mais, dans un exemple type d'installation prévue pour les buts mentionnés, le jet travaille normalement dans l'air.

En plaçant l'écran 16 le long d'un côté des jets de façon à empêcher de ce côté l'induction d'air, on crée un "effet de surface" qui tend à maintenir l'écoulement des jets en contact avec la paroi de l'écran. Cet effet déforme aussi le cœur du jet comme on peut voir sur la figure 2 où la pointe du cœur C est plus rapprochée de la surface adjacente de l'écran 16 que de l'axe de l'orifice d'émission du jet.

On remarquera maintenant que les orifices d'alimentation en verre sont situés, par rapport aux jets et à l'écran 16, assez près pour que les courants d'air induits sur le côté libre de chaque jet agissent sur le bulbe de verre G et contribuent à entraîner les filets de verre S vers le bas et latéralement pour les faire entrer dans l'écoulement des jets dans la région où ceux-ci longent l'écran. Les positions relatives des composants de chaque centre de fibrage définies plus précisément dans le tableau IV permettent de rendre très stables non seulement le jet, mais aussi l'écoulement du filet de verre et son entrée dans le jet. L'écran 16 empêche donc les courants parasites de provoquer une modification indésirable de la trajectoire des jets ou de faire flotter ces jets.

Il convient de remarquer (voir en particulier la figure 1) que l'effet de stabilisation décrit ci-dessus est obtenu sans exiger l'impact mutuel de jets adjacents de sorte que les centres de fibrage peuvent être très largement espacés les uns des autres si nécessaire, sans risque de provoquer une instabilité soit de l'écoulement des jets soit de l'alimentation en verre. Bien que l'espacement des jets puisse être tel qu'ils se heurtent quelque peu en aval de l'écran 16, et que cet impact entraîne la formation de

0013237

quelques courants tourbillonaires, on prévoit, dans la mise en œuvre de l'invention, que l'entrée des filets de verre dans les jets se produise dans la région stable de chaque jet située le long de la surface protectrice de l'écran 16.

Le filet de verre entrant dans chaque jet subit un étirage préliminaire dans le jet lui-même, mais la présente invention prévoit de plus que le principal étirage s'effectue dans la zone d'interaction créée dans le courant principal et décrite en détail dans la publication de brevet français 2.223.218 mentionné précédemment et dans le brevet américain 4.015.964.

On rappelle brièvement que, pour pénétrer dans le courant principal en établissant une zone d'interaction, chaque jet doit avoir une dimension et en particulier une largeur inférieure à celle du courant principal transversalement à ce dernier, de préférence une section inférieure, et son énergie cinétique par unité de volume doit être supérieure à celle dudit courant.

Selon les figures 1 et 2, le courant principal suit une direction pratiquement horizontale, tandis que les jets sont dirigés de haut en bas vers le courant et s'écoulent selon une direction sensiblement verticale, les filets de verre étant débités par gravité en des points décalés latéralement par rapport aux jets. Cette disposition n'est pas obligatoire et il est possible d'utiliser un courant principal et un jet orientés différemment, cependant l'alimentation du verre par gravité en combinaison avec l'agencement et les directions particulières qui viennent d'être décrites représentent la forme préférée de l'invention. Il convient de souligner que dans toutes ces formes de réalisation, chaque jet vient au contact de l'écran situé sur sa trajectoire entre son orifice d'émission et le courant principal.

Pour obtenir un jet d'énergie cinétique par unité de volume supérieure à celle du courant principal, on peut utiliser un jet à haute température et à vitesse élevée ; pourtant ces conditions détériorent les écrans sur lesquels elles provoquent une érosion et des effets indésirables de dilatation et de contraction thermiques. Il est donc préférable d'utiliser des jets à température et à vitesse relativement faibles, ce qui permet encore d'obtenir le rapport désiré entre l'énergie cinétique du jet et celle du courant principal puisque le fluide constituant chaque jet possède, à plus basse température, une densité plus élevée. En effet, étant donné que d'une part, l'énergie cinétique est déterminée par la vitesse mais aussi par la masse volumique du fluide du jet, on peut facilement obtenir un jet possédant une énergie cinétique par unité de volume plus élevée que celle du courant principal, même à des vitesses inférieures à celles de ce dernier.

L'emploi d'un jet à température ambiante permet d'utiliser une source d'air comprimé ordinaire pour l'alimentation en fluide. Toutefois, la température du jet n'est pas nécessairement aussi basse que la température ambiante, mais elle reste de préférence nettement inférieure au point de ramollissement de la matière thermoplastique à étirer et, dans le cas de l'étirage du verre ou de matières minérales analogues, la température du jet est, par exemple, inférieure à 200°C et de préférence inférieure à 100°C.

A titre d'exemple, lorsque le courant principal possède une vitesse comprise entre environ 200 et 800 m/s, cette gamme de valeurs étant particulièrement appropriée au fibrage de différentes matières minérales thermoplastiques telles que le verre, la vitesse du jet peut être très nettement inférieure à celle du courant principal. Plus précisément, avec un courant principal composé de produits de combustion à une température supérieure à 1000°C et une vitesse comprise entre 250 m/s et 800 m/s, et avec un jet d'air (ou d'un gaz de densité analogue) à une température inférieure à environ 100°C, on peut obtenir la prédominance désirée de l'énergie cinétique du jet si ce dernier possède une vitesse comprise, par exemple, entre environ 200 m/s et 400 m/s. Il va de soi que ces vitesses sont celles mesurées en un point situé en aval de l'écran, dans la région où le jet s'approche du courant principal.

Les figures 6, 7 et 8 indiquent les positions relatives et les dimensions des divers éléments du dispositif de fibrage. On y a reporté les symboles identifiant les

divers paramètres auxquels se réfèrent les tableaux ci-dessous qui donnent à la fois les domaines de variation appropriés et les valeurs préférées.

## TABLEAU I

### FILIERE D'ALIMENTATION EN MATIERE ETIRABLE

| SYMBOLE | VALEUR PREFEREE | DOMAINE DE VARIATION |
|---|---|---|
| $d_T/d_J$ | 1.5 | $0.5 \longrightarrow 2.5$ |
| $d_R/d_J$ | 1 | $0.5 \longrightarrow 2.5$ |
| $D_R/d_J$ | 2.5 | $0.5 \longrightarrow 5$ |

## TABLEAU II

### ÉMISSION DU JET ET ECRAN

| SYMBOLE | VALEUR PREFEREE | DOMAINE DE VARIATION |
|---|---|---|
| $d_J$ (mm) | 1.5 | $0.5 \longrightarrow 4$ |
| $Y_J/d_J$ | 2.5 | $1.5 \longrightarrow$ |
| $Z_S/d_J$ | 2.5 | $1 \longrightarrow 10$ |

## TABLEAU III

### COURANT PRINCIPAL

| SYMBOLE | VALEUR PREFEREE | DOMAINE DE VARIATION |
|---|---|---|
| $l_B/d_J$ | 5 | $2.5 \longrightarrow 10$ |

## TABLEAU IV

### POSITIONS RELATIVES DES DIVERS ELEMENTS

| SYMBOLE | VALEUR PREFEREE | DOMAINE DE VARIATION |
|---|---|---|
| $Z_{JF}/d_J$ | 0.5 | $0 \longrightarrow 2.5$ |
| $Z_{JB}/d_J$ | 8.5 | voir le domaine de variation de $Z_S/d_J$ et $Z_{SB}/d_J$ |
| $Z_{SB}/d_J$ | 6 | $0 \longrightarrow 12$ |
| $X_{BJ}/d_J$ | $-2.5$ | $-7.5 \longrightarrow +2.5$ |
| $X_{JF}/d_J$ | 2.5 | $1.5 \longrightarrow 4$ |

En ce qui concerne le symbole $X_{BJ}$, les valeurs négatives correspondent à la disposition représentée sur la figure 6.

L'expression "orifice d'alimentation" en matière étirable utilisée dans la description doit être interprétée dans un sens très général ; elle peut désigner, en fait, soit un orifice isolé, soit une fente associée à une rangée de jets, soit encore une série d'orifices situés, par exemple, à l'extrémité de tétons d'alimentation. Lorsqu'on utilise une fente, celle-ci est située transversalement au courant principal et la matière issue de la fente est alors divisée en une série de bulbes et de filets par l'action de l'air induit par les jets.

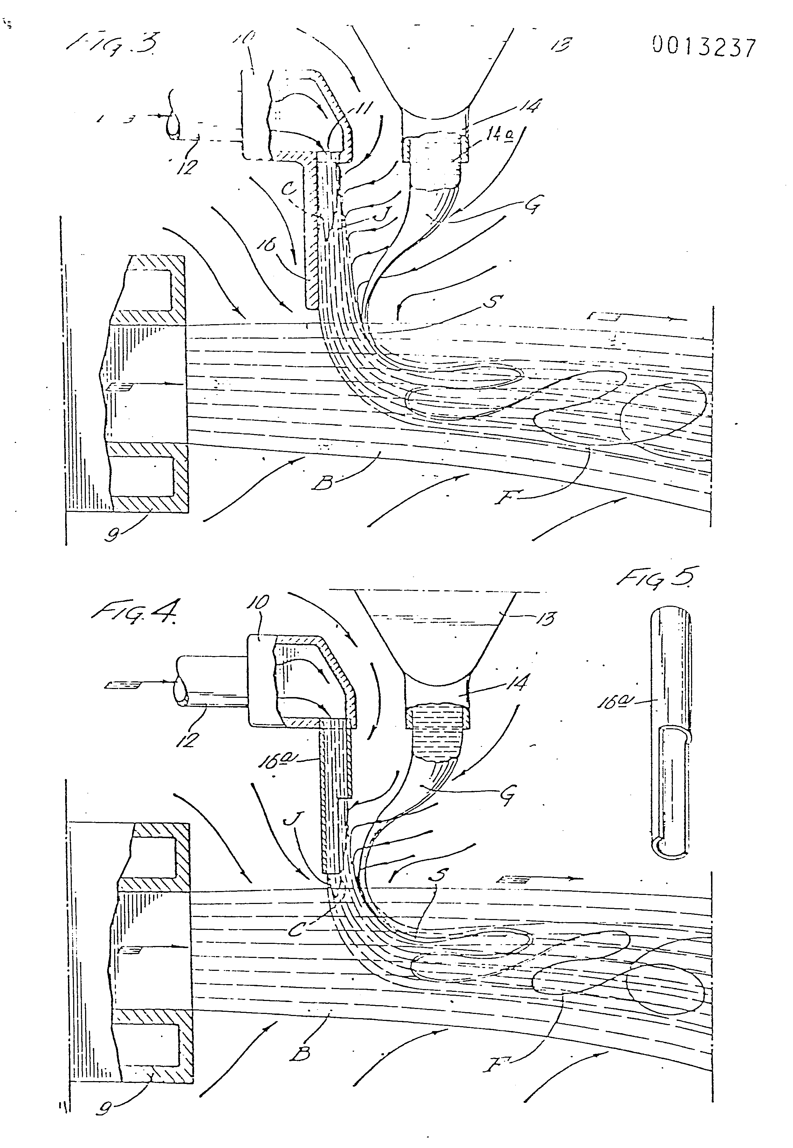

Dans la variante d'installation représentée sur la figure 3, les divers éléments du dispositif sont identiques à ceux des figures 1 et 2, mais leurs positions relatives à l'intérieur du centre de fibrage sont légèrement différentes. En particulier, la nourrice à jets et l'écran 16 sont beaucoup plus rapprochés du courant principal que sur les figures 1 et 2. En effet, la nourrice à jets 10 et l'écran 16 ont été abaissés de sorte que l'écran couvre presque la totalité de la distance entre les orifices de sortie des jets et la limite du courant principal. En même temps, la source d'alimentation en verre, qui comprend les réservoirs ou tétons 14, est également rapprochée du courant principal. En outre, les positions relatives de la nourrice à jets 10 et de la source d'alimentation en verre sont également modifiées, chacun des réservoirs d'alimentation en verre 14 étant abaissé en une position telle que l'air induit du côté libre du jet fait entrer le filet de verre S dans la zone d'influence du jet sensiblement au niveau de la limite du courant principal. Le filet de verre entre donc de façon pratiquement directe dans la zone d'interaction située dans le courant principal, de sorte que le mode de réalisation de la figure 3 diffère de celui des figures 1 et 2, en ce sens que le filet de verre ne subit aucun étirage appréciable dans le jet avant d'atteindre la zone d'interaction.

Etant donné que, dans l'installation de la figure 3, le jet est protégé par l'écran pratiquement sur la totalité de sa trajectoire entre son orifice d'émission et le courant principal, l'influence défavorable d'éventuels courants parasites est tout-à-fait éliminée.

Dans la version des figures 4 et 5, les positions relatives des éléments de l'installation sont sensiblement les mêmes que sur la figure 3, mais au lieu d'utiliser un écran de surface plane, on utilise des écrans séparés, individuels, 16a, de forme tubulaire (représentés en perspective sur la figure 5). A chacun des orifices d'émission de jet est donc associé un écran comprenant un tronçon de tube dont un côté est découpé à son extrémité inférieure. Cet écran constitue un canal, qui enveloppe et protège totalement le jet sur la moitié de sa circonférence. La source d'alimentation en verre est agencée pour fournir chaque bulbe de verre G dans une région décalée par rapport au côté ouvert de l'écran tubulaire, de sorte que le filet de verre S est entraîné et poussé dans le jet par l'air induit. Un tel dispositif offre aussi la possibilité d'augmenter l'espacement entre les écrans et le courant principal, et de les disposer par exemple comme dans l'installation des figures 1 et 2. Dans ce cas, la source d'alimentation en verre peut également être placée à une distance du courant principal telle que celle indiquée en référence aux figures 1 et 2.

On indique ci-après des valeurs appropriées pour la pression, la température, la vitesse et l'énergie cinétique par unité de volume du jet et du courant principal, ainsi que pour le rapport de ces énergies cinétiques.

TABLEAU V :        JET

| SYMBOLE | VALEUR PREFEREE | DOMAINE DE VARIATION | |
|---|---|---|---|
| $P_J$ (bars) | 4.5 | 1 $\longrightarrow$ | 50 |
| $T_J$ ( °C) | 20 | $\longrightarrow$ | 1500 |
| $V_J$ (m/sec) | 330 | 200 $\longrightarrow$ | 900 |
| $\rho_J V_J{}^2$ (bars) | 3.9 | 0.8 $\longrightarrow$ | 45 |

12

## TABLEAU VI

### COURANT PRINCIPAL

| SYMBOLE | VALEUR PREFEREE | DOMAINE DE VARIATION |
|---|---|---|
| $P_B$ (bar) | 0.150 | 0.050 $\longrightarrow$ 0.500 |
| $T_B$ ( °C) | 1550 | 1300 $\longrightarrow$ 1800 |
| $V_B$ (m/s) | 400 | 200 $\longrightarrow$ 800 |
| $\rho_B V_B^2$ (bar) | 0.3 | 0.1 $\longrightarrow$ 1 |

### ENERGIE CINETIQUE PAR UNITE DE VOLUME

| SYMBOLE | VALEUR PREFEREE | DOMAINE DE VARIATION |
|---|---|---|
| $\dfrac{\rho_J V_J^2}{\rho_B V_B^2}$ | 13 | 0.8 $\longrightarrow$ 450 |

Exemple :

On utilise le dispositif représenté sur la figure 1 pour fabriquer des fibres à partir d'un verre de composition suivante :

| | |
|---|---|
| $SiO_2$ | 46,92 |
| $Fe_2O_3$ | 1,62 |
| $Al_2O_3$ | 9,20 |
| MnO | 0,16 |
| CaO | 30,75 |
| MgO | 3,95 |
| $Na_2O$ | 3,90 |
| $K_2O$ | 3,50 |

(toutes parties en poids).

Ce verre présente une viscosité de 30 poises à 1310°C, 100 poises à 1216°C et 300 poises à 1155°C, il est porté à la température de 1450°C pour effectuer le fibrage. Les valeurs de pression, température, et vitesse des jets gazeux porteurs et du courant principal correspondent aux valeurs préférées indiquées respectivement dans les tableaux V et VI. De la même façon, les distances séparant chacun des éléments du dispositif, les dimensions des orifices, et les dimensions de l'écran choisi dans cet exemple, correspondent aussi aux valeurs préférées des tableaux I à IV.

0013237

Le fibrage peut être effectué avec un débit de verre par orifice (ou tirée unitaire) compris entre 20 et 150 kg/jour. Avec un débit de 75 kg/jour on obtient des fibres dont le diamètre moyen est d'environ 6 microns.

REVENDICATIONS

1. Procédé de fabrication de fibres à partir d'une matière étirable, selon lequel on engendre à distance et en direction d'un courant gazeux principal, au moins un jet gazeux induisant des courants de gaz ambiant le long de sa trajectoire vers le courant principal, et ayant avant de pénétrer dans le courant principal une dimension inférieure et une énergie cinétique par unité de volume supérieure à celles du courant principal, la matière étirable étant amenée sous forme d'un filet dans les gaz induits par le jet, caractérisé en ce que l'on empêche l'induction de courants d'un côté du jet au moyen d'un écran protecteur présentant une surface dont les génératrices sont sensiblement rectilignes, et longent le jet du côté opposé à l'amenée de matière étirable.

2. Procédé selon la revendication 1, caractérisé en ce que l'on empêche l'induction de gaz ambiant du côté amont du jet par rapport au sens d'écoulement du courant principal.

3. Procédé selon l'une des revendications 1 et 2, caractérisé en ce que le filet de matière étirable est amené dans les courants de gaz induits par le jet suffisamment loin du courant principal pour être entraîné dans le jet en amont du point de pénétration de ce jet dans le courant principal, par induction avec le gaz ambiant.

4. Procédé selon l'une des revendications 1 et 2, caractérisé en ce que le filet de matière étirable est amené dans les courants de gaz induits par le jet suffisamment prés du courant principal pour être entraîné de façon pratiquement directe dans la zone d'interaction du courant principal, par induction avec le gaz ambiant.

5. Procédé selon l'une des revendications précédentes, caractérisé en ce que le jet est dirigé vers le bas et en ce que le filet de matière étirable est débité à distance du jet, par gravité, dans la zone de gaz induit par le jet.

6. Dispositif pour la fabrication de fibres à partir d'une matière étirable, comprenant une source d'alimentation en matière étirable, un générateur de courant gazeux principal, un générateur émettant au moins un jet gazeux de dimension inférieure à celle du courant principal dans une direction transversale à ce courant pour pénétrer dans celui-ci et y former une zone d'interaction, ce générateur de jets étant situé à distance de la limite du courant principal, caractérisé en ce qu'il comporte un écran muni d'un élément sensiblement rectiligne placé le long d'au moins une partie de l'un des côtés du jet, entre le générateur de jet et la limite du courant principal, pour empêcher une induction importante de gaz ambiant sur ce côté, et en ce que la source d'alimentation en matière étirable est disposée de manière à diriger un filet de matière dans les gaz induits par un jet du côté opposé à l'écran, chaque filet étant ainsi introduit dans une zone d'interaction.

7. Dispositif selon la revendication 6, caractérisé en  ce que l'écran possède une surface de protection sensiblement plane qui s'étend parallèlement au jet, le long d'une limite de ce jet.

8. Dispositif selon la revendication 6, caractérisé en ce que l'écran comprend un élément en forme de canal qui enveloppe partiellement le jet.

9. Dispositif selon l'une des revendications 6 à 8, caractérisé en ce que, par rapport au sens d'écoulement du courant principal, l'écran est placé sur le côté amont du jet, lui-même situé en amont de la source d'alimentation en matière.

10. Dispositif selon l'une des revendications 6, 7 et 9, dans lequel le générateur de jet comprend une série d'orifices d'émission émettant une série de jets espacés latéralement, la source d'alimentation en matière étirable étant munie d'orifices d'alimentation associés chacun à un jet, caractérisé en ce que l'écran possède une surface de protection commune à toute la série de jets.

11. Dispositif selon l'une des revendications 6, 8 et 9, dans lequel le générateur de jet comprend une série d'orifices émettant une série de jets espacés latéralement, la source d'alimentation en matière étirable étant munie

0013237

d'une série d'orifices d'alimentation associés chacun à un jet, caractérisé en ce qu'un écran séparé en forme de canal est placé à la sortie de chaque orifice d'émission de jet, chaque canal enveloppant son jet respectif.

12. Dispositif selon la revendication 10, caractérisé en ce que les orifices d'émission des jets sont suffisamment espacés les uns des autres pour éviter l'impact mutuel des jets dans la région où les filets de matière étirable sont amenés dans les courants de gaz induits.

13. Dispositif selon l'une des revendications 6 à 12, caractérisé en ce que le générateur de jet(s) dirige le(s) jet(s) vers le bas, la source d'alimentation en matière étirable étant placée de manière à débiter chaque filet de matière par gravité en un point décalé latéralement par rapport au jet correspondant mais dans la région des courants de gaz induits par ce jet.

14. Dispositif selon l'une des revendications 6 à 13, caractérisé en ce que l'écran placé sur un côté du jet s'étend sensiblement sur toute la distance séparant le générateur de jet de la limite du courant principal.

0013237

FIG.1.

FIG.6.

FIG.7.

FIG.8.

FIG 2.

0013237

FIG.3

FIG.4

FIG 5

0013237

0013237

Numéro de la demande

Office européen
des brevets

**RAPPORT DE RECHERCHE EUROPEENNE**

EP 79 40 1059

| DOCUMENTS CONSIDERES COMME PERTINENTS | | | CLASSEMENT DE LA DEMANDE (Int Cl ¹) |
|---|---|---|---|
| Catégorie | Citation du document avec indication, en cas de besoin, des parties pertinentes | Revendica-tion concernée | |
| | US - A - 2 515 738 (SLAITE)<br>* Figure 1; colonne 2, lignes 51-55; colonne 3, lignes 1-6 *<br><br>-- | 1,2,6,<br>7 | C 03 B 37/06<br>D 01 D 5/14 |
| A | US - A - 4 118 213 (LEVECKE)<br>* En entier *<br><br>-- | 1,6 | |
| A | US - A - 4 070 173 (LEVECQUE)<br>* En entier *<br><br>---- | 1,6 | **DOMAINES TECHNIQUES RECHERCHES (Int. Cl. ³)**<br><br>C 03 B 37/06<br>D 01 D 5/14 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 13-03-1980 | VAN DEN BOSSCHE |

OEB Form 1503.1  06.78